# EUROPÄISCHE PATENTSCHRIFT

(11) **EP 0 424 788 B1**
(45) Veröffentlichungstag und Bekanntmachung des Hinweises auf die Patenterteilung: **04.08.1993**
(21) Anmeldenummer: 90119871.3
(22) Anmeldetag: 17.10.1990
(51) Int. Cl.: A01K 15/02, F16C 11/12

(54) **Trainingskarussell für Pferde**
Roundabout for training horses
Manège d'exercice pour chevaux

(30) Priorität: 21.10.1989 DE 3935142
(43) Veröffentlichungstag der Anmeldung: 02.05.1991
(73) Patentinhaber: van Eck, Arie Gysbert, NL-3451 GN Vleuten (NL); Wolf, Arthur, NL-3481 GZ Harmelen (NL)
(72) Erfinder: van Eck, Arie Gysbert, NL-3451 GN Vleuten (NL); Wolf, Arthur, NL-3481 GZ Harmelen (NL)
(74) Vertreter: Habbel, Hans-Georg, Dipl.-Ing.

(56) Entgegenhaltungen:
- DE-A- 2 852 777
- US-A- 2 795 834
- US-A- 3 602 010
- Fa. ECOL "TRAININGSMOLENS VOOR PAARDEN" Spijcklaan 4, NL-3481 GZ Harmelen (NL)

## Beschreibung

Die Erfindung bezieht sich auf ein Trainingskarussell für Pferde gemäß dem Oberbegriff des Hauptanspruches.

Ein gattungsbildendes Trainingskarussell wird in dem Firmenprospekt "Fa. ECOL TRAININGSMOLENS VOOR PAARDEN" vorgestellt. Hierbei sind die Pferde nicht fest an den vorderen Enden der Speichen angebunden, sondern laufen frei hinter dem am Ende der Speichen angeordneten Gatter her. Die Pferde können also in einem gewissen Rahmen - der vom Abstand der Gatter voneinander abhängt - ihre Laufgeschwindigkeit variieren.

Aus der DE-A-28 52 777 ist es bekannt, die Gatter an den zugehörigen Speichen so zu befestigen und die Speichen derart zu betätigen, daß sie anhalten, wenn ein Gatter um mehr als einen vorgegebenen Winkel gegenüber der Ruhelage verschwenkt wird. Hierbei erfolgt also ein plötzliches Stillsetzen der gesamten Anlage und es ist ein erheblicher Schaltungsaufwand für den einwandfreien Betrieb der Anlage erforderlich.

Der Erfindung liegt die Aufgabe zugrunde, ein Trainingskarussel zu schaffen, bei welchem ohne großen Kosten- und Steuerungsaufwand ein Verletzen der Tiere bei Kollision mit dem Gatter vermieden wird.

Diese der Erfindung zugrundeliegende Aufgabe wird im wesentlichen dadurch gelöst, daß das Gatter an die jeweils zugeordneten Enden der Speichen nur unter Zwischenschaltung einer oder mehrerer Wendelfedern anschließen. Hierbei kann al so das Gatter dann, wenn beispielsweise das Pferd stehenbleibt und das Gatter nunmehr an die Kruppe, d. h. das Hinterteil des Pferdes gelangt, ausschwenken, so daß ein Verletzen des Tieres nicht eintritt. Normalerweise stößt aber, wenn das Pferd zu langsam läuft, das Gatter langsam an die Kruppe des Tieres und wird dadurch etwas in den Federn zurückbewegt, und wenn nunmehr das Tier etwas schneller läuft, bewirkt das Zurückschwenken des Gatters, daß das Pferd einen leichten Schlag auf seine Kruppe erhält und dadurch insgesamt etwas schneller läuft.

Als nachteilig bei dem gattungsbildenden Trainingskarussell wurde auch empfunden, daß dann, wenn die Pferde aufbäumen, diese mit den Vorderläufen in das Gatter gelangen können und - da der Untergurt des Gatters fest mit den Vertikal streben verbunden ist - hier ebenfalls Verletzungen auftreten können oder sogar das ganze Karussell beschädigt werden kann.

Um auch hier ein pferdefreundliches Trainingskarussell zu schaffen, wird gemäß der Erfindung weiterhin vorgeschlagen, daß der Untergurt an den unteren Enden der Vertikal streben über nach unten offene Klemmittel gehalten ist. Es ist offensichtlich, daß dann, wenn die Tiere mit ihren Vorderläufen in das Gatter gelangen, nunmehr der Untergurt sich lösen kann, so daß das Tier sofort wieder frei ist.

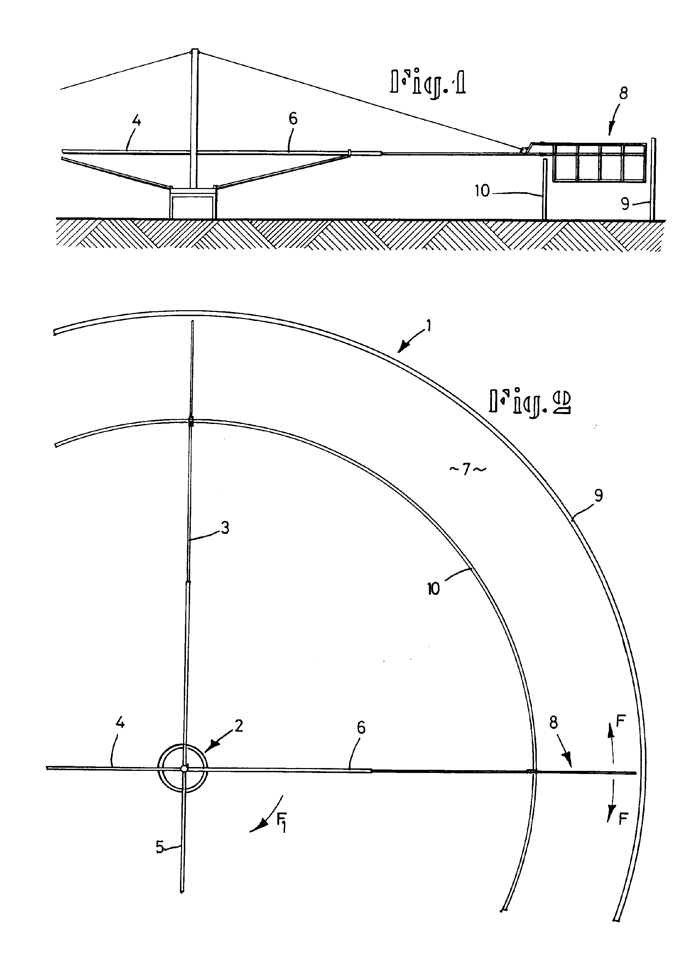

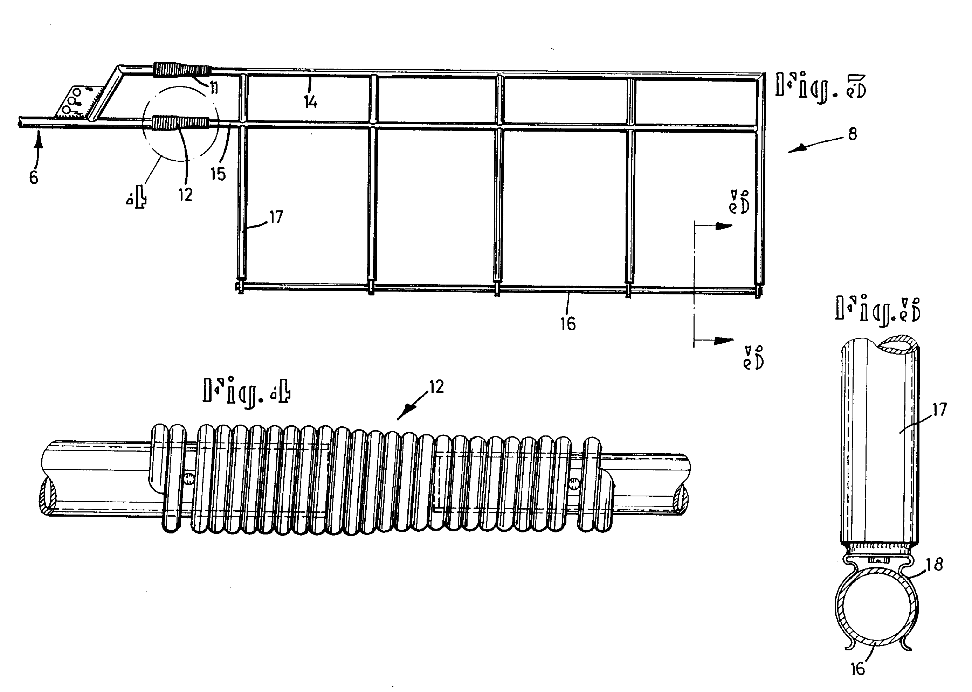

Ein Ausführungsbeispiel der Erfindung wird nachfolgend anhand der Zeichnungen erläutert. Die Zeichnungen zeigen dabei in
- Fig. 1: schaubildlich eine Seitenansicht teilweise geschnitten auf ein Trainingskarussel 1, in
- Fig. 2: eine Draufsicht auf einen Teil eines Trainingskarussells, in
- Fig. 3: in größerem Maßstab der Anschluß des Gatters an die zugeordnete Speiche, in
- Fig. 4: in wiederum größerem Maßstab die Verbindung zwischen Speiche und Gatter und in
- Fig. 5: die Anordnung des Untergurtes an den Vertikalstreben.

In den Zeichnungen ist mit 1 ein Trainingskarussell bezeichnet, das im wesentlichen aus einer zentralen Antriebsvorrichtung 2 besteht, an die bei dem dargestellten Ausführungsbeispiel vier Speichen 3, 4, 5 und 6 anschließen. Die Speichen verlaufen von der zentralen Antriebsvorrichtung zum Außenumfang des Trainingskarussells und tragen in ihrem äußeren Umfangsbereich Gatter 8, die im wesentlichen aus einem Obergurt, einem Untergurt und Vertikalstreben bestehen. Die Gatter 8 befinden sich dabei im Bereich eines sogenannten Pferdelaufes 7, der durch zwei kreisförmige Zäune 9 und 10 begrenzt wird.

Die Umlaufrichtung des Trainingskarussells ist in der Zeichnung mit dem Pfeil F₁ bezeichnet.

Gemäß der Erfindung schließen - wie dies besonders deutlich aus Fig. 3 ersichtlich ist - die einzelnen Gatter 8 an die zugeordneten Speichen unter Zwischenschaltung von Wendelfedern an. Bei dem in Fig. 3 dargestellten Ausführungsbeispiel ist die Speiche 6 erkennbar, die sich an ihrem äußeren Ende gabelförmig erweitert und mit diesen gabelförmigen Endteilen der Speiche 6 fluchten Anschlußstreben 14 und 15 des Gatters 8, wobei die Anschlußstrebe 14 den Obergurt bildet und die Anschlußstrebe 15 einen unterhalb des Obergurtes angeordneten Zusatzgurt.

Die Verbindung zwischen den gabelförmigen Enden der Speichen 6 und den Anschlußstreben 14 und 15 erfolgt unter Zwischenschaltung je einer Wendelfeder 11 und 12, wobei die Enden der Anschlußstreben 14 und 15 und der gabelförmigen Enden der Speiche 6 in einem gewissen Abstand voneinander angeordnet sind, wie dies Fig. 4 verdeutlicht.

Die Wirkung der in Fig. 4 erkennbaren Wendelfeder 12 besteht darin, daß nunmehr die Anschlußstrebe 15 in jeder Richtung gegenüber dem gabelförmigen Ende der Speiche 6 ausweichen kann und insbesondere in Richtung der in Fig. 2 eingezeichneten beiden Pfeile F. Beim Auftreffen des Gatters 8, beispielsweise auf die Kruppe eines Pferdes, das zu langsam läuft, kann also das Gatter ausweichen, übt gleichzeitig einen gewissen Druck auf das Pferd aus, so daß dieses seinen Laufschritt beschleunigen wird. Vorzugsweise bestehen insbesondere die Gatter bei dieser Anlage aus Aluminium, so daß die erforderliche Tragfestigkeit gewährleistet ist. Durch die Anordnung der beiden Anschlußstreben 14 und 15 und die gabelförmige Ausbildung der Speichen wird ebenfalls die erforderliche Tragfestigkeit der Wendelfedern 11 und 12 insgesamt erreicht.

Fig. 5, die einen Schnitt gemäß der Linie 5 - 5 in Fig. 3 darstellt, verdeutlicht, daß der Untergurt 16 nicht fest mit dem unteren Ende der Vertikalstrebe 17 verbunden ist, sondern an die Vertikalstrebe 17 unter Zwischenschaltung eines nach unten offenen Klemmittels, nämlich der Feder 18 anschließt. Gelangt nun ein Tier beispielsweise mit seinem Vorderläufen in das Gatter, kann der Untergurt sofort nach unten ausweichen und es treten weniger Verletzungen des Tieres noch Beschädigungen der zugeordneten Speiche ein.

## Patentansprüche

1. Trainingskarussell (1) für Pferde mit einer zentralen Antriebsvorrichtung (2) und mit von dieser umlaufend angetriebenen Speichen (3, 4, 5, 6), an deren äußeren Enden im Bereich des Pferdelaufes (7) ein aus Obergurt, Untergurt und Vertikalstreben gebildetes Gatter (8) angeordnet ist, dadurch gekennzeichnet, daß das Gatter (8) an die Speichen (3, 4, 5, 6) nur unter Zwischenschaltung wenigstens einer Wendelfeder (11, 12) anschließt.

2. Trainingskarussell nach Anspruch 1, dadurch gekennzeichnet, daß die Speichen (3, 4, 5 und 6) an ihren äußeren Enden gabelförmig ausgebildet sind und das Gatter (8) zwei fluchtende Anschlußstreben (14, 15) aufweist und zwei übereinander angeordnete Wendelfedern (11, 12) vorgesehen sind.

3. Trainingskarussell nach Anspruch 1 oder 2, dadurch gekennzeichnet, daß eine der Anschlußstreben (14) als Obergurt des Gatters (8) ausgebildet ist.

4. Trainingskarussell nach einem oder mehreren der vorhergehenden Ansprüche, dadurch gekennzeichnet, daß der Untergurt (16) an den unteren Enden der Vertikalstreben (17) über nach unten offene Klemmittel gehalten ist.

## Claims

1. A training carrousel (1) for horses, comprising a central drive device (2) and spokes (3, 4, 5, 6) driven revolvingly thereby, at the outer ends of which spokes (3, 4, 5, 6) in the area of the horse run (7) there is arranged a gate (8) consisting of a top beam, a bottom beam and vertical struts, characterized in that the gate (8) is connected to the spokes (3, 4, 5, 6) only through the interposition of at least one spiral coiled spring (11, 12).

2. A training carrousel according to claim 1, characterized in that the spokes (3, 4, 5 and 6) are of forked construction at their outer ends, in that the gate (8) comprises two aligned connecting struts (14, 15) and in that two spiral coiled springs (11, 12) are provided one above the other.

3. A training carrousel according to claim 1 or claim 2, characterized in that one of the conencting struts (14) is constructed as the top beam of the gate (8).

4. A training carrousel according to any one of the preceding claims, characterized in that the bottom beam (16) is held at the lower ends of the vertical struts (17) by means of clamping means which are open at the bottom.

## Revendications

1. Manège d'exercice (1) pour chevaux avec un dispositif d'entraînement central (2) et avec des rayons (3, 4, 5, 6) entraînés en rotation par celui-ci, aux extrémités extérieures desquels est disposée dans le secteur d'un passage pour chevaux (7) une grille (8) formée d'une barre supérieure, d'une barre inférieure et de barreaux verticaux, caractérisé en ce que la grille (8) ne se raccorde aux rayons (3, 4, 5, 6) qu'avec intercalation d'au moins un ressort spiral (11, 12).

2. Manège d'exercice selon la revendication 1, caractérisé en ce que les rayons (3, 4, 5, et 6) sont conçus en forme de fourche à leur extrémité extérieure et la grille (8) présente deux barreaux de raccordement (14, 15) alignés et deux ressorts spiraux (11, 12) disposés l'un au-dessus de l'autre sont prévus.

3. Manège d'exercice selon la revendication 1 ou 2, caractérisé en ce que l'un des barreaux de raccordement (14) est conformé comme la barre supérieure de la grille (8).

4. Manège d'exercice selon l'une quelconque des revendications précédentes, caractérisé en ce que la barre inférieure (16) est maintenue sur les extrémités inférieures des barreaux verticaux (17) par des moyens de serrage ouverts vers le bas.
